(19) **Europäisches Patentamt / European Patent Office / Office européen des brevets**

(11) **EP 4 703 527 A1**

(12) **EUROPEAN PATENT APPLICATION**
published in accordance with Art. 153(4) EPC

(43) Date of publication:
04.03.2026 Bulletin 2026/10

(21) Application number: 24797065.0

(22) Date of filing: 24.04.2024

(51) International Patent Classification (IPC):
$E04B\ 1/94^{(2006.01)}$    $B32B\ 7/027^{(2019.01)}$
$B32B\ 27/18^{(2006.01)}$    $C08J\ 5/18^{(2006.01)}$
$C09K\ 21/02^{(2006.01)}$    $E06B\ 5/16^{(2006.01)}$

(52) Cooperative Patent Classification (CPC):
B32B 7/027; B32B 27/18; C08J 5/18; C09K 21/02;
E04B 1/94; E06B 5/16

(86) International application number:
PCT/JP2024/016080

(87) International publication number:
WO 2024/225319 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 25.04.2023 JP 2023071754
22.09.2023 JP 2023157971

(71) Applicant: Sekisui Chemical Co., Ltd.
Osaka-shi, Osaka 530-8565 (JP)

(72) Inventors:
• SHIMAMOTO, Michio
Tokyo 105-8566 (JP)
• SASAGAWA, Naoki
Hasuda-shi, Saitama 349-0198 (JP)

(74) Representative: Ter Meer Steinmeister & Partner
Patentanwälte mbB
Nymphenburger Straße 4
80335 München (DE)

(54) **THERMALLY-EXPANDABLE FIRE-RESISTANT SHEET**

(57) A thermally expandable fire-resistant sheet of the present invention is a thermally expandable fire-resistant sheet including a matrix component and thermally expandable graphite, and having an expansion onset temperature of 160°C or less, the thermally expandable fire-resistant sheet having an average thickness of 0.5 mm or more and a thickness variation that is 10% or less of the average thickness, and being a wound body with a length of 1 m or more. According to the present invention, a long thermally expandable fire-resistant sheet including thermally expandable graphite with a low expansion onset temperature can be provided.

EP 4 703 527 A1

## Description

Technical Field

The present invention relates to a thermally expandable fire-resistant sheet.

Background Art

In the field of construction, fire-resistant materials are used in fire prevention equipment such as doors and windows. Fire-resistant sheets and the like, in which inorganic fillers, thermally expandable graphite, and the like are blended in resins, are used as the fire-resistant materials (see e.g., PTL1). Such fire-resistant sheets expand when heated, to form fire-resistant insulating layers of combustion residues, thereby exhibiting fire-resistant insulating properties. Specifically, the fire-resistant sheets are installed in the gaps between doors and windows and the frames such as door frames and window frames surrounding them, and in the event of a fire, the sheets expand in a thickness direction, blocking the gaps and preventing the spread of fire.

Citation List

Patent Literature

PTL1: JP 2017-141463 A

Summary of Invention

Technical Problem

Thermally expandable graphite, which begins to expand at low temperatures, is often used in the fire-resistant sheets, from the viewpoint of quickly expanding in the event of a fire to block the flow of inflammable gas. However, when using the thermally expandable graphite that expands at such low temperatures, there has been a problem that roughened surface is formed on the sheet during molding, causing bubbles to form, or the like, making it difficult to obtain long (long in length) sheets with a good appearance.

Therefore, an object of the present invention is to provide a thermally expandable fire-resistant sheet with a low expansion onset temperature, a good appearance and long length.

Solution to Problem

As a result of intensive studies, the present inventors have found that the above problem can be solved with a thermally expandable fire-resistant sheet including a matrix component and thermally expandable graphite, and having an expansion onset temperature of 160°C or less, the thermally expandable fire-resistant sheet being a wound body with a length of 1 m or more, and have completed the present invention. Namely, the present invention provides the following [1] to [8].

[1] A thermally expandable fire-resistant sheet including a matrix component and thermally expandable graphite, and having an expansion onset temperature of 160°C or less, the thermally expandable fire-resistant sheet having an average thickness of 0.5 mm or more and a thickness variation that is 10% or less of the average thickness, and being a wound body with a length of 1 m or more.

[2] The thermally expandable fire-resistant sheet according to the above [1], further including at least one selected from the group consisting of a thermally expandable inorganic material other than the thermally expandable graphite and an inorganic filler.

[3] The thermally expandable fire-resistant sheet according to the above [2], wherein a content of the thermally expandable graphite is 3 to 300 parts by mass and a content of the inorganic filler is 2 to 200 parts by mass, based on 100 parts by mass of the matrix component.

[4] The thermally expandable fire-resistant sheet according to any one of the above [1] to [3], wherein an expansion ratio is 5 or more when heated at 200°C for 30 minutes.

[5] The thermally expandable fire-resistant sheet according to any one of the above [1] to [4], wherein an elution ratio is 3% or less after being immerged in pure water at 60°C for 1 week.

[6] The thermally expandable fire-resistant sheet according to any one of the above [1] to [5], wherein the matrix component is free of phosphorus components.

[7] The thermally expandable fire-resistant sheet according to any one of the above [1] to [6], including a substrate or a pressure-sensitive adhesive layer on at least one side of the sheet.

[8] Fire prevention equipment having the thermally expandable fire-resistant sheet cut out of the wound body according to any one of the above [1] to [7] mounted on at least a part of the fire prevention equipment.

Advantageous Effects of Invention

According to the present invention, a thermally expandable fire-resistant sheet with a low expansion onset temperature, a good appearance and long length, can be provided.

Description of Embodiments

Hereinafter, the present invention will be described in detail.

[Thermally Expandable Fire-Resistant Sheet]

A thermally expandable fire-resistant sheet of the present invention is a thermally expandable fire-resistant sheet including a matrix component and thermally expandable graphite, and having an expansion onset temperature of 160°C or less, the thermally expandable fire-resistant sheet having an average thickness of 0.5 mm or more and a thickness variation that is 10% or less of the average thickness, and being a wound body with a length of 1 m or more.

Hereinafter, the thermally expandable fire-resistant sheet of the present invention will be described in detail.

<Matrix Component>

The thermally expandable fire-resistant sheet of the present invention includes a matrix component. In the matrix component, thermally expandable graphite described later, and a thermally expandable inorganic material other than the thermally expandable graphite and an inorganic filler blended as required are dispersed.

The matrix component that can be used is not particularly limited, and may include a thermoplastic resin, a thermosetting resin, rubber, and the like. The matrix component may be formed from one component or a plurality of components.

Examples of the thermoplastic resin include a polyvinyl chloride resin, a polypropylene resin, a polyethylene resin, an ethylene-vinyl acetate copolymer resin, a vinyl acetate resin, a vinyl acetate copolymer resin, a fluororesin, a phenolic resin, a polycarbonate resin, an acrylic resin, a polystyrene resin, and a polyacrylonitrile resin.

Examples of the thermosetting resin include a polyurethane resin, a phenolic resin, an epoxy resin, a urea resin, a melamine resin, an unsaturated polyester resin, and polyimide.

Examples of the rubber include natural rubber, isoprene rubber, butadiene rubber, 1,2-polybutadiene rubber, styrene-butadiene rubber, chloroprene rubber, nitrile rubber, butyl rubber, chlorinated butyl rubber, ethylene-propylene rubber (EPM), ethylene-propylene-diene rubber (EPDM), a styrene-based thermoplastic elastomer, chlorosulfonated polyethylene, acrylic rubber, epichlorohydrin rubber, silicone rubber, fluororubber, and urethane rubber.

In the present invention, the matrix component is preferably an extrusion-molding resin, a dry-solidifying adhesive, a moisture-curing adhesive, a heat-melt adhesive, or a thermosetting-reactive adhesive. When the matrix component is one of these specific resin components, it becomes easy to obtain a thermally expandable fire-resistant sheet with a good appearance and a long length of 1 m or more.

(Extrusion-Molding Resin)

The extrusion-molding resin is a resin capable of obtaining a thermally expandable fire-resistant sheet through extrusion molding. Using the extrusion-molding resin as a matrix component in a thermally expandable composition for obtaining the thermally expandable fire-resistant sheet allows the composition to be extruded to obtain a thermally expandable fire-resistant sheet. Controlling appropriately the viscosity of the thermally expandable composition during extrusion molding reduces the kneading load and prevents the degradation of thermally expandable graphite. Thus, the generation of gas resulting from the degradation of thermally expandable graphite is reduced, thereby enabling the production of a thermally expandable fire-resistant sheet with a good appearance.

Examples of the extrusion-molding resin include a thermoplastic resin and rubber. The thermoplastic resin and the rubber are as described above.

The extrusion-molding resin is preferably rubber, and among others, particularly preferably one or more selected from the group consisting of chloroprene rubber, styrene-butadiene rubber, and a styrene-based thermoplastic elastomer.

Examples of the above styrene-based thermoplastic elastomer include styrene-butadiene-styrene (SBS), polystyrene-poly(ethylene-propylene) (SEP), polystyrene-poly(ethylene-butylene)-polystyrene (SEBS), polystyrene-poly(ethylene-propylene)-polystyrene (SEPS), polystyrene-poly(ethylene-ethylene/propylene)-polystyrene (SEEPS), and styrene-isoprene-styrene (SIS). Among these, SBS or SEP is preferable.

(Dry-Solidifying Adhesive)

Examples of the dry-solidifying adhesive include a solvent-based adhesive, an emulsion adhesive, and a synthetic rubber latex adhesive. When using these adhesives, the thermally expandable composition for obtaining a thermally expandable fire-resistant sheet is in a liquid state, which reduces the kneading load and prevents the degradation of thermally expandable graphite. Thus, the generation of gas resulting from the degradation of thermally expandable graphite is reduced, thereby enabling the production of a thermally expandable fire-resistant sheet with a good appearance and long length.

The solvent-based adhesive is present as a solid in the thermally expandable fire-resistant sheet, but is dissolved in an organic solvent in the thermally expandable composition for obtaining a thermally expandable fire-resistant sheet. Therefore, when using the solvent-based adhesive, the thermally expandable composition will contain an organic solvent. In addition, solidification is possible by volatilizing the organic solvent.

Examples of the solvent-based adhesive include a vinyl acetate resin-based, vinyl acetate copolymer resin-based, rubber-based, acrylic resin-based, polyester-based, and silicone resin-based adhesives. The above silicon resin-based adhesive is preferably a non-modified silicone resin-based adhesive.

In the present description, examples of the vinyl acetate copolymer resin-based adhesive include copolymers of vinyl acetate and monomers that can be copolymerized with vinyl acetate (e.g., $\alpha$-olefins and (meth)acrylic acid esters), such as vinyl acetate-(meth)acrylic acid ester copolymers. The (meth)acrylic acid is a concept containing both acrylic acid and methacrylic acid. In addition, examples of the above rubber-based adhesive include chloroprene, butadiene, styrene-butadiene, butadiene-acrylonitrile, isobutylene-isoprene, and ethylene-propylene, and above all, the chloroprene is preferable.

Among the solvent-based adhesives, chloroprene, acrylic resin-based, or silicone resin-based (non-modified) adhesives are preferable.

The emulsion adhesive is present as a solid in the thermally expandable fire-resistant sheet, but is dispersed in a dispersion medium, preferably water, in the thermally expandable composition for obtaining a thermally expandable fire-resistant sheet. When using the emulsion adhesive, the thermally expandable composition will contain a dispersion medium such as water.

Examples of the emulsion adhesive include a vinyl acetate resin-based, vinyl acetate copolymer resin-based, acrylic resin-based, aqueous polymer-isocyanate-based, and polyurethane-based adhesives, and above all, the vinyl acetate copolymer resin-based and polyurethane-based adhesives are preferable.

The synthetic rubber latex adhesive is present as a solid in the thermally expandable fire-resistant sheet, but is dispersed in a dispersion medium, preferably water, in the thermally expandable composition for obtaining a thermally expandable fire-resistant sheet. When using the synthetic rubber latex adhesive, the thermally expandable composition contains a dispersion medium such as water.

Examples of the synthetic rubber latex adhesive include chloroprene, butadiene, styrene-butadiene, butadiene-acrylonitrile, isobutylene-isoprene, and ethylene-propylene, and above all, the chloroprene is preferable.

When using the dry-solidifying adhesive, the thermally expandable composition will contain water or an organic solvent. A solid content of the thermally expandable composition when using a solvent-based adhesive, for example, 10 to 90% by mass, and preferably 30 to 70% by mass.

(Moisture-Curing Adhesive)

The moisture-curing adhesive is an adhesive that is cured when exposed to moisture in the air. The thermally expandable composition including the moisture-curing adhesive can be cured by moisture, enabling mixing at low temperatures, which significantly reduces the kneading load and effectively reduces the degradation of thermally expandable graphite. Thus, the generation of gas resulting from the degradation of thermally expandable graphite is reduced, thereby enabling the production of a thermally expandable fire-resistant sheet with an extremely good appearance and long length.

Examples of the moisture-curing adhesive include a cyanoacrylate-based, modified silicone resin-based, and silylated urethane-based adhesives, and are preferably the modified silicone resin-based or the silylated urethane-based adhesives, and more preferably the modified silicone resin-based adhesives.

(Modified Silicone Resin-Based)

Examples of the modified silicone resin-based moisture-curing adhesive include polymers with a crosslinkable silyl group (crosslinkable silyl group-containing polymers).

The crosslinkable silyl group-containing polymer is preferably at least one selected from a crosslinkable silyl group-containing polyoxyalkylene polymer, a crosslinkable silyl group-containing acrylic polymer, and a crosslinkable silyl group-containing acrylic-modified polyoxyalkylene polymer.

Here, the modified silicone resin-based moisture-curing adhesive differs from the silylated urethane-based adhesive described later in that it does not have urethane bonds or urea bonds in its main chain.

The crosslinkable silyl group-containing polyoxyalkylene polymer is preferably a polymer with a crosslinkable silyl group in its molecule and a polyoxyalkylene as a main chain backbone, and more preferably a polymer with a polyoxyalkylene as a main chain backbone and crosslinkable silyl groups at a main chain end. Furthermore, the above polyoxyalkylene is preferably polyoxypropylene.

In addition, the crosslinkable silyl group-containing acrylic-modified polyoxyalkylene polymer is preferably a polymer with a crosslinkable silyl group in its molecule and (meth)acrylic-modified polyoxyalkylene as a main chain backbone, and more preferably a polymer with (meth)acrylic-modified polyoxyalkylene as a main chain backbone and a crosslinkable silyl group at a main chain end. Furthermore, the above (meth)acrylic-modified polyoxyalkylene is preferably (meth)acrylic-modified polyoxypropylene.

Examples of the crosslinkable silyl group-containing acrylic polymer include polymers with an acrylic polymer as a main chain backbone and one or more crosslinkable silyl groups in a molecular. Here, any conventionally known acrylic polymer can be used; and it is not particularly limited, if it is an acrylic polymer that one or more selected from acrylic monomers such as (meth)acrylic acid, a (meth)acrylic acid ester, (meth)acrylonitrile, and (meth)acrylamide are polymerized or copolymerized.

Examples of the crosslinkable silyl group include a group in which one or more reactive groups are bonded to a silicon atom. The reactive group is a group selected from a halogen atom, a hydrogen atom, a hydroxyl group, an alkoxy group, an acyloxy group, a ketoximate group, an amide group, an acid amide group, a mercapto group, a ketoxime group, an alkenyloxy group, and an aminooxy group, and when there is a plurality of reactive groups, the reactive groups may be the same or different. Above all, the reactive group is preferably the alkoxy group, and more preferably the methoxy group.

Namely, the crosslinkable silyl group is preferably an alkoxysilyl group. Examples of the alkoxysilyl group include trialkoxysilyl groups such as a trimethoxysilyl group, a triethoxysilyl group, a triisopropoxysilyl group, and a triphenoxysilyl group; dialkoxysilyl groups such as a dimethoxymethylsilyl group and a diethoxymethylsilyl group; and monoalkoxysilyl groups such as a methoxydimethylsilyl group and an ethoxydimethylsilyl group. Among these, the trialkoxysilyl groups or the dialkoxysilyl groups are preferable, and the trimethoxysilyl group or the dimethoxymethylsilyl group is more preferable.

(Silylated Urethane-Based)

The silylated urethane-based moisture-curing adhesive is a polymer with at least one of a urethane bond or a urea bond in its main chain and a crosslinkable silyl group. The crosslinkable silyl group is preferably located at a main chain end. The crosslinkable silyl group is similar to those described in the modified silicone resin-based moisture-curing adhesive mentioned above.

In addition, it is preferable that the main chain of the silylated urethane-based moisture-curing adhesive has a polyoxyalkylene backbone and contains at least one of a urethane bond or a urea bond. The polyoxyalkylene is preferably polyoxypropylene.

(Curing Catalyst)

The moisture-curing adhesive is preferably cured using a curing catalyst. Examples of the curing catalyst include organic tin compounds such as dibutyltin dilaurate, dibutyltin oxide, dibutyltin diacetate, dibutyltin phthalate, bis(dibutyltin lauric acid)oxide, dibutyltin bis(acetylacetonate), dibutyltin bis(monoester malate), stannous octoate, dibutyltin octoate, dioctyltin oxide, dibutyltin bis(triethoxysilicate), bis(dibutyltin bistriethoxysilicate)oxide, dibutyltin oxybisethoxysilicate, and 1,1,3,3-tetrabutyl-1,3-dilauryl oxycarbonyl-distannoxane, and organic titanate-based compounds such as tetra-n-butoxy titanate and tetraisopropoxytitanate. These curing catalysts may be used alone or in combination with two or more types.

A content of the curing catalyst is preferably 1 to 10 parts by mass based on 100 parts by mass of the matrix component, and more preferably 1 to 5 parts by mass.

(Heat-Melt Adhesive)

The heat-melt adhesive is an adhesive that is non-flowing at room temperature but become flowable when heated, and is also sometimes referred to as a hot-melt adhesive. In addition, the heated heat-melt adhesive solidifies upon cooling again. When the heat-melt adhesive is used in the thermally expandable composition for obtaining a thermally expandable fire-resistant sheet, the viscosity of the composition can be reduced by heating, thereby reducing the kneading load and the degradation of thermally expandable graphite. Thus, the generation of gas resulting from the degradation of thermally expandable graphite is reduced, thereby enabling the production of a thermally expandable fire-resistant sheet with a good appearance and long length.

Examples of the heat-melt adhesive include a vinyl acetate resin-based, vinyl acetate copolymer resin-based, ethylene-vinyl acetate copolymer resin-based, rubber-based, acrylic resin-based, polyurethane-based, polystyrene-based, polyolefin-based, polyester-based, and polyamide-based adhesives.

Examples of the above rubber-based adhesive include chloroprene, butadiene, styrene-butadiene, butadiene-acrylonitrile, isobutylene-isoprene, and ethylene-propylene. In addition, the above polystyrene-based adhesive is a polymer containing styrene-based monomer, and may also be a copolymer of a styrene-based monomer and an aliphatic monomer.

Among these, an ethylene-vinyl acetate copolymer resins-based or a polystyrene-based adhesive is preferable.

When using the heat-melt adhesive, a tackifying resin may be used in combination. Examples of the tackifying resin include a rosin-based, terpene-based, petroleum resin-based, and coumarone resin-based resins.

(Thermosetting-Reactive Adhesive)

The thermosetting-reactive adhesive is an adhesive that cures at any temperature. A thermally expandable composition including a thermosetting-reactive adhesive can be cured by heat at a temperature lower than the expansion onset temperature of thermally expandable graphite, enabling mixing at low temperatures, to particularly reduce the kneading load and effectively reduce the degradation of thermally expandable graphite. Thus, the generation of gas resulting from the degradation of thermally expandable graphite is reduced, thereby enabling the production of a thermally expandable fire-resistant sheet with an extremely good appearance and long length.

Examples of the thermosetting-reactive adhesive include an epoxy resin-based, polyurethane resin-based, silicone resin-based, acrylic resin-based, and polyester resin-based adhesives.

Among these, the epoxy resin-based adhesive is preferable. When using the thermosetting-reactive adhesive, it is possible to use a curing agent or a catalyst in combination with the epoxy resin. Examples of the curing agent include an amine-based, acid anhydride-based, phenolic resin-based, and amide-based compounds. Examples of the catalyst include an amine salt-based, imidazole-based, and phosphine phosphonium salt-based compounds. More preferably, the use of a curing agent and a catalyst together makes it possible to reduce the temperature required for the thermosetting reaction, and furthermore, enabling the production of a thermally expandable fire-resistant sheet with a good appearance and long length.

In the present invention, a content of the matrix component is preferably 20 to 80% by mass based on the total amount of the thermally expandable fire-resistant sheet, and more preferably 30 to 70% by mass.

<Thermally Expandable Graphite>

The thermally expandable fire-resistant sheet of the present invention includes thermally expandable graphite. The thermally expandable graphite is a conventionally known material that expands when heated, and because it expands to form a large volume of voids when heated, it prevents the spread of fire or extinguishes the fire when the fire-resistant sheet is ignited.

Thermally expandable graphite is produced by treating powders such as natural flake graphite, thermally decomposed graphite, and kish graphite with an inorganic acid and a strong oxidizing agent to form graphite intercalation compounds, and it is a type of a crystalline compound that retains its layered structure of carbon. Examples of the inorganic acid include concentrated sulfuric acid, nitric acid, and selenic acid. Examples of the strong oxidizing agent include concentrated nitric acid, a persulfate, perchloric acid, a perchlorate, a permanganate, a dichromate, a dichromate, and hydrogen peroxide. The thermally expandable graphite obtained through the above acid treatment may further be neutralized with ammonia, an aliphatic low-grade amine, an alkali metal compound, an alkaline earth metal compound, or the like.

A particle size of the thermally expandable graphite is preferably 20 to 200 mesh. The particle size of the thermally expandable graphite within the above range makes it easier to form a large volume of voids by expansion, thereby enhancing fire resistance. In addition, its dispersing ability in resin is enhanced.

An average aspect ratio of the thermally expandable graphite is preferably 2 or more, more preferably 5 or more, and even more preferably 10 or more. An upper limit of the average aspect ratio of the thermally expandable graphite is not particularly limited, but from the viewpoint of crack prevention of thermally expandable graphite, it is preferably 1,000 or less. The average aspect ratio of 2 or more of the thermally expandable graphite makes it easy to form a large volume of voids upon expansion, thereby enhancing flame retardance.

The average aspect ratio of thermally expandable graphite is determined by measuring the maximum dimension (major diameter) and minimum dimension (minor diameter) of 10 pieces of thermally expandable graphite, dividing the maximum dimension (major diameter) by the minimum dimension (minor diameter), and taking the average of these values. The major and minor diameters of thermally expandable graphite can be measured using a field emission scanning electron microscope (FE-SEM), for example.

The expansion onset temperature of the thermally expandable graphite is 160°C or less. The expansion onset temperature of the thermally expandable graphite of 160°C or less makes it easier to adjust the expansion onset temperature of the thermally expandable fire-resistant sheet to a lower temperature, so that it expands at the initial stage of a fire to form a fire-resistant insulating layer, thereby maintaining good fire resistance for a long period of time.

The expansion onset temperature of the thermally expandable graphite is preferably 100 to 160°C, and more preferably 120 to 150°C.

The expansion onset temperature of the thermally expandable graphite is measured using the method described in Examples.

It is preferable that the expansion onset temperature of the thermally expandable graphite be lower than the decomposition onset temperature of the matrix component. This enhances the expandability of the thermally expandable fire-resistant sheet and increases the mechanical strength of the formed fire-resistant insulating layer, thereby enhancing the heat resistance.

The expansion onset temperature of the thermally expandable graphite is preferably 5°C or more lower than the decomposition onset temperature of the matrix component, and more preferably 10°C or more lower.

Here, the decomposition onset temperature indicates the temperature at which the matrix component begins to decompose and weight loss initiates, and is measured using a thermogravimetric analyzer under a condition of a dry air atmosphere at a heating rate of 10°C/min.

A content of the thermally expandable graphite is preferably 3 to 300 parts by mass based on 100 parts by mass of the matrix component, more preferably 10 to 200 parts by mass, even more preferably 30 to 100 parts by mass, and still more preferably 30 to 90 parts by mass. The content of the thermally expandable graphite within these lower limits or more can provide appropriate heat resistance for the thermally expandable fire-resistant sheet. In addition, the content of the thermally expandable graphite within these upper limits or less reduces the amount of gas generated during the production process of the thermally expandable fire-resistant sheet, making it easier to obtain long products with a good appearance.

<Thermally Expandable Inorganic Material Other Than Thermally Expandable Graphite>

The thermally expandable fire-resistant sheet of the present invention may include a thermally expandable inorganic material other than the thermally expandable graphite.

The thermally expandable inorganic material is a material that expands when heated, and the thermally expandable inorganic material is not particularly limited, and examples include vermiculite, kaolin, mica, metal phosphite salts, and Sirasu balloons.

When using the thermally expandable inorganic material, its content is preferably 2 to 200 parts by mass based on 100 parts by mass of the matrix component, more preferably 10 to 150 parts by mass, and even more preferably 30 to 100 parts by mass, from the viewpoint of enhancing the heat resistance.

<Inorganic Filler>

The thermally expandable fire-resistant sheet of the present invention may include an inorganic filler. The inorganic filler is an inorganic filler other than the thermally expandable graphite and the thermally expandable inorganic material.

The inorganic filler, during the formation of the fire-resistant insulating layer by expansion due to heating, increases heat capacity and inhibits heat transfer while acting as aggregates to enhance the strength of the expansion residues.

The inorganic filler usable in the present invention is not particularly limited, and examples include metal oxides such as alumina, zinc oxide, titanium oxide, calcium oxide, magnesium oxide, iron oxide, tin oxide, antimony oxide, and ferrite; metal carbonates such as calcium carbonate, zinc carbonate, strontium carbonate, and barium carbonate; metal hydroxides such as calcium hydroxide, magnesium hydroxide, aluminum hydroxide, and hydrotalcite; calcium salts such as calcium sulfate, gypsum fibers, calcium silicate; and other materials such as silica, diatomaceous earth, dawsonite, barium sulfate, talc, clay, montmorillonite, bentonite, activated white clay, sepiolite, imogolite, sericite, glass fibers, glass beads, aluminum nitride, boron nitride, silicon nitride, carbon black, graphite, carbon fibers, carbon balloons, various metal powders, potassium titanate, magnesium sulfate, lead zirconate titanate, aluminum borate, molybdenum sulfide, silicon carbide, stainless steel fibers, and zinc borate. The inorganic filler may be used alone or in combination with two or more types. Among these, calcium carbonate, iron oxide, and aluminum hydroxide are preferable from the viewpoint of enhancing the fire resistance of the thermally expandable fire-resistant sheet, and it is preferable to use calcium carbonate and iron oxide or calcium carbonate and aluminum hydroxide in combination. The inorganic filler may be used alone or in combination with two or more types.

A content of the inorganic filler, from the viewpoint of enhancing fire resistance, is preferably 2 to 200 parts by mass based on 100 parts by mass of the matrix component, more preferably 10 to 150 parts by mass, and even more preferably 30 to 100 parts by mass.

<Plasticizer>

The thermally expandable fire-resistant sheet of the present invention may contain a plasticizer from the viewpoint of enhancing formability. Examples of the plasticizer include phthalate ester plasticizers such as di-2-ethylhexyl phthalate (DOP), dibutyl phthalate (DBP), diheptyl phthalate (DHP), diisodecyl phthalate (DIDP); fatty acid ester plasticizers such as di-2-ethylhexyl adipate (DOA), diisobutyl adipate (DIBA), dibutyl adipate (DBA); epoxidized ester plasticizers such as epoxidized soybean oil; adipic acid esters plasticizers such as an adipic acid ester, and an adipic acid polyester; trimellitic acid ester plasticizers such as tri-2-ethylhexyl trimellitate (TOTM), and triisononyl trimellitate (TINTM); and process oils such as mineral oil. The plasticizer may be used alone or in combination of two or more types.

When the thermally expandable fire-resistant sheet contains the plasticizer, a content of the plasticizer is preferably 1 to 60 parts by mass and more preferably 5 to 50 parts by mass based on 100 parts by mass of the matrix component.

(Other Components)

The thermally expandable fire-resistant sheet in the present invention can contain any additive component other than those described above as required, within a range that does not impair the object of the present invention. A type of this additive component is not particularly limited, and various additives can be used. Examples of such additives include a lubricant, a shrinkage inhibitor, a crystal nucleating agent, a colorant (pigment, dye, and the like), an ultraviolet absorber, an antioxidant, an anti-aging agent, a fire retardant, a fire retardant auxiliary, an antistatic agent, a surfactant, a vulcanizing agent, a dispersant, and a surface treatment agent. The amount of the additive added can be appropriately selected within a range that does not impair the formability or the like, and the additive may be used alone or in combination of two or more types.

<Long Product>

The thermally expandable fire-resistant sheet of the present invention is a wound body with a length of 1 m or more. The length is a length in a longitudinal direction (MD direction) of the thermally expandable fire-resistant sheet. The thermally expandable fire-resistant sheet of the present invention includes the thermally expandable graphite with a low expansion onset temperature, but can be made into a long product with a good appearance and a length of 1 m or more. In addition, lengths of 1 m or more enhance productivity and preferably expand the range of applications.

A length of the thermally expandable fire-resistant sheet is preferably 5 m or more, more preferably 20 m or more, even more preferably 50 m or more, and still more preferably 100 m or more. Usually, the length of the thermally expandable fire-resistant sheet is 500 m or less.

In the present description, a MD direction is an abbreviation for Machine Direction, which is the same as the direction of flow of the composition during coating or the like, as described later, and is the longitudinal direction of the sheet. A TD direction is an abbreviation for Transverse Direction, which is the direction perpendicular to the MD direction.

In addition, the thermally expandable fire-resistant sheet of the present invention can reduce thickness variation even when the length is 1 m or more, to obtain long products with high dimensional accuracy.

In the present invention, since the degradation of thermally expandable graphite can be prevented by reducing the kneading load when kneading the composition, it is presumed that the gas generation can be reduced and the thickness variation can be reduced.

The wound body in the present invention is a thermally expandable fire-resistant sheet having a length of 1 m or more that is wound into a roll, for example, a thermally expandable fire-resistant sheet with a length of 1 m or more that is wound around a cylindrical winding core. The winding core may be omitted.

The thermally expandable fire-resistant sheet of the present invention has an average thickness of 0.5 mm or more and a thickness variation that is 10% or less of the average thickness. A thermally expandable fire-resistant sheet with such a small thickness variation and high dimensional accuracy makes it easy to efficiently produce the wound body of a long sheet and also enhances the appearance.

The average thickness means the average value obtained by measuring the thickness at ten points spaced at equal intervals in the longitudinal direction of the thermally expandable fire-resistant sheet. The average thickness is preferably 0.8 mm or more, more preferably 1 mm or more, and preferably 5 mm or less. The measurement of the thickness shall be performed at the center in the width direction of the sheet.

The thickness variation is calculated as the absolute value A of the difference between the thickness obtained at each point when measuring the thickness at 10 points at equal intervals in the longitudinal direction of the thermally expandable fire-resistant sheet as described above and the above average thickness, and means the average value of the absolute values A of the 10 points. The thickness variation is preferably 0.1 mm or less, more preferably 0.08 mm or less, and even more preferably 0.05 mm or less.

From the viewpoint of ensuring a good appearance of the sheet, the thickness variation of the thermally expandable fire-resistant sheet is 10% or less, preferably 5% or less of the average thickness.

In addition, a width of the thermally expandable fire-resistant sheet is not particularly limited, but 0.005 to 2.0 m, for example.

The thermally expandable fire-resistant sheet of the present invention preferably exhibits a thermal shrinkage ratio of 1% or less in both the MD and TD directions even when the length is 1 m or more, and more preferably 0.5% or less. With such a low thermal shrinkage ratio, even when heat is applied in the production process of the wound body, for example, peeling due to shrinkage and dimensional shortage are prevented.

The thermal shrinkage ratio is calculated based on the following formula by cutting a 100 mm square evaluation sample, heat treating it at 60°C for 6 hours, and measuring the lengths before and after heat treatment.

Thermal Shrinkage Ratio (%) = 100×(Length Before Heat Treatment - Length After Heat Treatment)/Length Before Heat Treatment

The thermal shrinkage ratios in the MD direction and TD direction can be calculated using the above formula based on the lengths before and after heat treatment in each of MD and TD directions.

In addition, 10 or more of 100 mm square evaluation samples are prepared at equal intervals along the longitudinal direction of the sheet, and the thermal shrinkage ratios calculated from these evaluation samples are averaged to determine the thermal shrinkage ratio in the MD direction and the thermal shrinkage ratio in the TD direction.

The thermal shrinkage ratio can be adjusted by changing the contents of various components that constitute the thermally expandable fire-resistant sheet.

<Expansion Onset Temperature, Expansion Ratio>

The thermally expandable fire-resistant sheet of the present invention has an expansion onset temperature of 160°C or less. The expansion onset temperature of 160°C or less allows the sheet to expand at the relatively low temperatures of the initial stage of a fire to form a fire-resistant insulating layer, making it easy to maintain good fire resistance for a long period of time.

The expansion onset temperature of the thermally expandable fire-resistant sheet is preferably 155°C or less, more preferably 150°C or less, and preferably 120°C or more.

The expansion onset temperature of the thermally expandable fire-resistant sheet is measured by the method described in Examples.

In addition, the thermally expandable fire-resistant sheet of the present invention preferably has an expansion ratio of 5 or more when heated at 200°C for 30 minutes. The expansion ratio of 5 or more makes it easier to block gaps in fire prevention equipment during a fire, thereby enhancing fire resistance.

The expansion ratio is preferably 6 or more, and more preferably 8 or more when heated at 200°C for 30 minutes. An upper limit of the expansion ratio is not particularly limited, but it is 50, for example.

The expansion ratio of the thermally expandable fire-resistant sheet is measured by the method described in Examples.

<Elution Ratio>

The thermally expandable fire-resistant sheet of the present invention preferably has an elution ratio of 3% or less after being immersed in pure water at 60°C for 1 week. The elution ratio of 3% or less prevents the components constituting the thermally expandable fire-resistant sheet from being eluted, even when the thermally expandable fire-resistant sheet is placed in an environment of high-humidity or water contact, preventing the decrease in fire resistance. In addition, when the thermally expandable fire-resistant sheet is mounted on fire prevention equipment, contamination of the fire prevention equipment and resulting appearance defects can be prevented.

The above elution ratio of the thermally expandable fire-resistant sheet is preferably 2% or less, and more preferably 1% or less. The lower the elution ratio, the better, and the lower limit is 0%.

The elution ratio can be adjusted by appropriately selecting each component to be blended into the thermally expandable fire-resistant sheet. Specifically, compounds that are poorly soluble in water should be used for the matrix component, thermally expandable graphite, inorganic fillers blended as required, and other additives.

The elution ratio is measured by the method described in Examples.

<Phosphorus Component>

The matrix component included in the thermally expandable fire-resistant sheet of the present invention is preferably free of phosphorus components. By using a matrix component that is free of phosphorus components, the amount of the phosphorus components in the thermally expandable fire-resistant sheet can be reduced. In addition, it is preferable that components other than the matrix component included in the thermally expandable fire-resistant sheet are free of phosphorus components, too. Namely, it is preferable that the thermally expandable fire-resistant sheet is free of phosphorus components.

The matrix component and the thermally expandable fire-resistant sheet may contain phosphorus components of impurity quantity that are unavoidably included. That is, in the present description, free of phosphorus components means that a content of the phosphorus components is 0.1% by mass or less, and preferably 0.01% by mass or less.

The free of phosphorus components enhances water resistance, ensuring an excellent expansion ratio, residue hardness, and shape retention after expansion, even after prolonged exposure to water. Here, phosphorus components refer to compounds containing phosphorus atoms. For the above matrix component, thermally expandable graphite, and inorganic fillers and other additives that may be blended as required, it is preferable not to use compounds containing phosphorus atoms.

<Method for Producing Thermally Expandable Fire-Resistant Sheet>

The thermally expandable fire-resistant sheet of the present invention is composed of a thermally expandable composition including a matrix component and thermally expandable graphite, and specifically, it can be obtained by molding the thermally expandable composition using methods of extruding, coating, or the like, described later. In addition to the matrix component and the thermally expandable graphite, the thermally expandable composition may include a thermally expandable inorganic material other than the thermally expandable graphite, and an inorganic filler, as described above.

The thermally expandable fire-resistant sheet of the present invention can be obtained by extrusion molding a kneaded mixture that the thermally expandable composition is kneaded, or by applying the kneaded mixture to an arbitrary object and solidifying or drying the thermally expandable composition after application.

From the viewpoint of obtaining a wound body with a small thickness variation, a good appearance, and a length of 1 m or more, it is preferable to adopt a method with low kneading load in the kneading of the thermally expandable composition. A low kneading load prevents the thermally expandable graphite from degradation, thereby reducing gas generation. Thus, it becomes easier to obtain a wound body with a good appearance and a length of 1 m or more.

Specifically, when using the extrusion-molding resin described above as a matrix component, from the viewpoint of reducing the kneading load, the Mooney viscosity ML(1+4) at 100°C of the thermally expandable composition is preferably 10 to 70, and more preferably 30 to 60.

When using the above described extrusion-molding resin as a matrix component, it is preferable that the thermally expandable composition be extruded to obtain a thermally expandable fire-resistant sheet. During extrusion molding, the thermally expandable composition should be melted in an extruder. The extruder may be either a single-screw extruder or a twin-screw extruder. In addition, it is preferably an extruder with a vent mechanism. This allows the gas generated during the kneading of the thermally expandable composition to be escaped outside the system, resulting in a thermally expandable fire-resistant sheet with high thickness accuracy and a good appearance.

A kneading temperature during the extrusion molding should be equal to or less than the expansion onset temperature of the thermally expandable graphite, preferably 80 to 160°C, and more preferably 90 to 120°C.

When using the dry-solidifying adhesive such as a solvent-based adhesive, an emulsion-adhesive, or a synthetic rubber latex adhesive, as a matrix component, from the viewpoint of reducing the kneading load, the viscosity of the thermally expandable composition measured by a rheometer at room temperature (40°C) and a shear rate of 25 s$^{-1}$ is preferably 0.1 to 20 Pa·s, and more preferably 2 to 8 Pa·s.

In addition, when using the heat-melt adhesive as a matrix component, from the viewpoint of reducing the kneading load, the viscosity of the thermally expandable composition measured by a rheometer at 120°C and a shear rate of 25 s$^{-1}$ is preferably 0.1 to 200 Pa·s, and more preferably 1 to 100 Pa·s.

When using the dry-solidifying adhesive as a matrix component, a kneaded mixture of the thermally expandable composition is preferably applied to an arbitrary object, to obtain a thermally expandable fire-resistant sheet.

The kneading should be performed at about room temperature, preferably 20 to 40°C, for example.

When using the dry-solidifying adhesive, the thermally expandable fire-resistant sheet can be formed by drying the thermally expandable composition after application and removing the solvent, since the thermally expandable composition is a liquid containing a solvent. Drying may be done by leaving it at normal temperature (about 25°C), but it is preferably done by heating. Heating is preferably performed at a temperature equal to or lower than the expansion onset temperature of the thermally expandable graphite, for example, at 50 to 160°C, preferably at about 60 to 120°C.

When using the heat-melt adhesive as a matrix component, a kneaded and melted mixture of the thermally expandable composition is preferably applied to an arbitrary object, to obtain a thermally expandable fire-resistant sheet. The kneading should be performed at a temperature equal to or lower than the expansion onset temperature of thermally expandable graphite, preferably at 80 to 160°C, and more preferably at 90 to 120°C.

An object to which the thermally expandable composition is applied is not particularly limited, but may be a release-treated resin film, for example, and in the case of producing a thermally expandable fire-resistant sheet provided with a substrate, the substrate may be the object to which the thermally expandable composition is applied.

<Substrate, Pressure-Sensitive Adhesive Layer, Separator>

The thermally expandable fire-resistant sheet of the present invention may be used as a single sheet, or it may be used as a multilayer sheet with other parts attached as appropriate. Specifically, the thermally expandable fire-resistant sheet may have a substrate or a pressure-sensitive adhesive layer on at least one side. For example, the thermally expandable fire-resistant sheet may have a substrate on one side (multilayer sheet of substrate/thermally expandable fire-resistant sheet), a pressure-sensitive adhesive layer on one side (multilayer sheet of pressure-sensitive adhesive layer/thermally expandable fire-resistant sheet), or a substrate on one side and a pressure-sensitive adhesive layer on the other side (multilayer sheet of pressure-sensitive adhesive layer/thermally expandable fire-resistant sheet/ substrate). Furthermore, the thermally expandable fire-resistant sheet may have a separator, for example, a separator on the surface of the pressure-sensitive adhesive layer.

(Substrate)

The substrate is, for example, in the form of a woven fabric, nonwoven fabric, and film, and these are formed from a thermoplastic resin, a thermosetting resin, an elastomer resin, and the like, and among these, preferably formed from the thermoplastic resin. The substrate may also be formed from glass fibers, ceramic fibers, cellulose fibers, polyester fibers, carbon fibers, graphite fibers, thermosetting resin fibers, and the like.

The preferable form of the substrate is a film. A film with an internal cavity is also suitable as a film.

Specific examples of the thermoplastic resin include polyesters such as polyvinyl chloride, polyethylene terephthalate and polybutylene terephthalate; polyolefins such as polyethylene, polypropylene, poly(1-butene), and polypentene; and other resins such as polyvinyl acetate, polystyrene, an acrylic resin, an acrylonitrile-butadiene-styrene (ABS) resin, polycarbonate, polyamide, polyphenylene ether, and polyethersulfone.

Among the above, from the viewpoint of adhesion with the thermally expandable fire-resistant sheet, preferable thermoplastic resins are polyvinyl chloride, polyethylene terephthalate, polyolefin, and polyvinyl acetate. Furthermore, from the viewpoint of fire retardancy, the polyvinyl chloride is more preferable. In addition, a polyethylene terephthalate film with an internal cavity is also preferable.

Specific examples of the thermosetting resin include an epoxy resin, a urethane resin, a phenolic resin, an unsaturated polyester, an alkyd resin, a urea resin, and polyimide.

Specific examples of the elastomer resin include isoprene rubber, butadiene rubber, 1,2-polybutadiene rubber, styrene-butadiene rubber, chloroprene rubber, nitrile rubber, butyl rubber, ethylene-propylene rubber, chlorosulfonated polyethylene, acrylic rubber, epichlorohydrin rubber, silicone rubber, fluororubber, urethane rubber, polyisobutylene rubber, and butyl chloride rubber.

One or two or more of the above thermoplastic resin, thermosetting resin, and elastomer resin are used.

A substrate thickness is preferably 1 to 20% of the thickness of the multilayer sheet. The substrate thickness of 1% or more of the thickness of the multilayer sheet allows the substrate to easily support the thermally expandable fire-resistant sheet. The substrate thickness of 20% or less of the thickness of the multilayer sheet makes it easier to prevent the substrate from separating from the thermally expandable fire-resistant sheet and wrinkles on the substrate when the multilayer sheet is bent, and to maintain the appearance of the multilayer sheet well.

The substrate thickness is, for example, 10 to 500 $\mu$m, preferably 20 to 450 $\mu$m, and more preferably 30 to 400 $\mu$m. A thickness of the substrate of these lower limits or more can provide the necessary strength to support the thermally expandable fire-resistant sheet to the substrate. Also, the thickness of the upper limits or less can prevent the substrate from becoming thicker than necessary, making the multilayer sheet easier to be used in fire prevention equipment such as doors.

(Pressure-Sensitive Adhesive Layer)

The pressure-sensitive adhesive layer may be a single layer consisting only of a layer made of a pressure-sensitive adhesive agent (hereinafter also referred to as a pressure-sensitive adhesive agent layer) or a pressure-sensitive adhesive double coated tape with pressure-sensitive adhesive agent layers on both surfaces of the substrate for the pressure-sensitive adhesive double coated tape, but it is preferable to consist of a pressure-sensitive adhesive agent layer. The pressure-sensitive adhesive double coated tape will constitute a pressure-sensitive adhesive layer when one of the pressure-sensitive adhesive agent layers is attached to the thermally expandable fire-resistant sheet or separator.

The pressure-sensitive adhesive agent constituting the pressure-sensitive adhesive agent layer is not particularly limited, and examples include an acrylic pressure-sensitive adhesive agent, a urethane pressure-sensitive adhesive agent, and a rubber pressure-sensitive adhesive agent. The thickness of the pressure-sensitive adhesive layer is not particularly limited, but is, for example, 10 to 500 $\mu$m, preferably 50 to 200 $\mu$m.

The substrate for the pressure-sensitive adhesive double coated tape is not particularly limited as long as it is a substrate used for a general pressure-sensitive adhesive double coated tape, but examples include non-woven fabrics, papers such as Japanese paper and the like, woven fabrics which are made of natural fiber, synthetic fibers and the like, resin films which are made of polyester, polyolefin, soft polyvinyl chloride, hard polyvinyl chloride, acetate and the like, and flat yarn cloths.

(Separator)

As a separator, for example, one with a substrate for separator and a release layer provided on at least one side of the substrate for separator may be used. The release layer can be formed through the application of a release treatment to the substrate for separator. The separator may be arranged so that a side on which the release layer is provided is in contact with the pressure-sensitive adhesive layer. In addition, the separator may be one that both surfaces of the substrate for separator are subjected to release treatment to provide the release layers on both sides.

The release layer is not particularly limited, but is composed of an organic resin, for example. Examples of the organic resin that can be used as a known release agent include a fluororesin, a long-chain alkyl-containing resin, an alkyd resin, a polyolefin resin, and a rubber elastomer.

A resin film, paper, or the like, can be used as the substrate for separator. The resin film may be formed from a thermoplastic resin, a thermosetting resin, or an elastomer resin. As specific examples of the thermoplastic resin, the thermosetting resin, or the elastomer resin, those listed as resin films can be used, but the thermoplastic resin is preferable.

A separator thickness is preferably 0.3 to 10% of the thickness of the multilayer sheet. The separator thickness of 0.3% or more of the thickness of the multilayer sheet makes it easier to prevent damage of the separator. In addition, the separator thickness of 10% or less of the thickness of the multilayer sheet makes it easier to prevent the thermally expandable fire-resistant sheet from separating from the separator and wrinkles on the separator when the multilayer sheet is bent, and to maintain the appearance of the multilayer sheet well.

The separator thickness is, for example, 1 to 200 $\mu$m, preferably 2 to 150 $\mu$m, and more preferably 5 to 100 $\mu$m. Setting the thickness of the separator at these lower limits or more allows the separator to provide unbreakable strength. Also, setting it at these upper limits or less prevents the fire-resistant material from separating from the separator and wrinkles on the separator, when the multilayer sheet is bent.

[Fire Prevention Equipment]

In the present invention, fire prevention equipment having the thermally expandable fire-resistant sheet cut from the wound body described above, mounted on at least a part of the fire prevention equipment can be provided. Examples of the fire-prevention equipment include fittings such as windows, paper screens, doors, sliding doors, and papered sliding doors; pillars; walls of reinforced concrete or the like; floors; and roofs. The thermally expandable fire-resistant sheet of the present invention is mounted on a part of the fire prevention equipment and expand in the event of fire to reduce or prevent the entry of flames and smoke. Above all, the thermally expandable fire-resistant sheet is preferably used for gaps between windows and window flames, and between doors and door flames

Examples

Hereinafter, the present invention will be specifically described with reference to examples, but the present invention is not limited to them.

The measurement and evaluation methods of each physical property are as follows.

<Expansion Onset Temperature of Thermally Expandable Graphite>

In a rheometer ("Discovery HR-2", produced by TA Instruments), 0.5 g of a sample of thermally expandable graphite powder was placed on a sample stand and wrapped in aluminum foil to prevent the powder from falling out. A 25 mmφ cone plate was pressed against a base plate until the load reached 0 [N]. Then, from that state, the sample was heated by a Peltier heater at a constant heating rate (10°C/min) from a set temperature of 50°C, and the temperature when the load reached 0.1 N was designated as the expansion onset temperature.

<Mooney Viscosity During Kneading>

The Mooney viscosity ML(1+4) at 100°C of the thermally expandable composition during kneading was measured in accordance with JIS K6300.

<Viscosity During Kneading (40°C, 120°C)>

Viscosity during kneading of the thermally expandable composition was measured using a rheometer.
The rheometer used was Discovery HR 20 produced by TA Instruments, and the measurements were performed at conditions of temperatures of 40°C and 120°C, and the shear rate of 25 s$^{-1}$.

<Expansion Onset Temperature of Thermally Expandable Fire-Resistant Sheet>

A thermally expandable fire-resistant sheet was used as a sample, and the temperature was increased at a heating rate of 10°C/min using a rheometer ("Discovery HR 2", produced by TA Instruments), and the temperature at which the normal direction force rises was measured, and this was designated as the expansion onset temperature.

<Expansion Ratio of Thermally Expandable Fire-Resistant Sheet>

The thermally expandable fire-resistant sheets of each Example and Comparative Example were made into a predetermined size (1.5 mm thick, 25 mm wide, and 25 mm long). The thermally expandable fire-resistant sheet of the predetermined size was placed on a stainless steel plate (98 mm square, 0.3 mm thick) and fed into an electric furnace to be heated at 200°C for 30 minutes. The expansion ratio was determined by dividing the thickness of the thermally expandable fire-resistant sheet after heating by the thickness of the thermally expandable fire-resistant sheet before heating.

<Thickness Variation>

The thickness was measured at 10 points equally spaced in the longitudinal direction of the thermally expandable fire-resistant sheet, and the average thickness was obtained by averaging these 10 thicknesses.
Then, the absolute value A of the difference between the thickness obtained at each point and the above average thickness was calculated when the thickness was measured at 10 points equally spaced in the longitudinal direction of the thermally expandable fire-resistant sheet, and the average of the absolute value A for the 10 points was designated as the thickness variation. Then the ratio (%) of the thickness variation to the average thickness was calculated.

<Appearance>

The appearance of the obtained thermally expandable fire-resistant sheet was evaluated according to the following criteria.
After producing a long fire-resistant sheet, it was left at 40°C for one week, and then evaluated by unwinding the fire-resistant sheet. During unwinding, the appearance of the sheet was observed to determine whether or not bubbles were observed on the surface. The case where no bubble of 5 mm or more in the width direction was observed was designated as A, and the case where the bubble of 5 mm or more in the width direction was observed was designated as B.

<Strength>

The strength of the obtained thermally expandable fire-resistant sheet was evaluated according to the following criteria.
The evaluation was made by unwinding the fire-resistant sheet at 20°C using a wound body of the fire-resistant sheet obtained by winding the long fire-resistant sheet obtained in each Example and Comparative Example. During unwinding, the appearance of the sheet was observed to see if it cracked or broken on the surface. The following evaluation criteria were used.

A: The sheet could be unwound without breaking.
B: The sheet broke during unwinding.

<Elution Ratio>

A test piece (10 g portion) prepared by cutting out the obtained thermally expandable fire-resistant sheet was immersed in 200 g of pure water; after one week passed in a sealed container at 60°C, the test piece was taken out; the immersed pure water was evaporated and dried; and the mass of resulting precipitates was measured. Using the value, the elution ratio was calculated according to the following formula, to serve as an index of water resistance.

Elution ratio (%) = [(mass of precipitates)/(mass of test piece before immersion in pure water)] $\times$ 100

Each component used in Examples and Comparative Example is as follows.

<Matrix Component>

· Chloroprene: "SKYPRENE B-31" produced by TOSOH CORPORATION, extrusion-molding resin.
· Chloroprene: "SKYPRENE Y-30S" produced by TOSOH CORPORATION, solvent-based adhesive, solvent (toluene).
· Chloroprene: "SKYPRENE LA-710" produced by TOSOH CORPORATION, synthetic rubber latex adhesive.
· Styrene-butadiene rubber (SBR): "JSR0202" produced by JSR Corporation, extrusion-molding resin.
· Styrene thermoplastic elastomer: styrene-butadiene-styrene (SBS), "TR1086" produced by JSR Corporation, extrusion-molding resin.
· Styrene thermoplastic elastomer (TPS): polystyrene-poly(ethylene-propylene) (SEP), "SEPTON 1020" produced by KURARAY CO. LTD., extrusion-molding resin.
· Acrylic resin: "ACRYDIC 57-773-BA" produced by DIC Corporation, solvent-based adhesive, solvent (ethyl acetate, butyl acetate).
· Silicone resin (non-modified): "KR220L" produced by Shin-Etsu Silicones Inc., solvent-based adhesive, solvent (toluene, isopropyl alcohol).
· Modified silicone resin-based: polymer with crosslinkable silyl groups, "MS polymer S-303" produced by KANEKA CORPORATION, moisture-curing adhesive.
· Modified silicone resin-based: polymer with crosslinkable silyl groups, "US-6150" produced by TOAGOSEI CO., LTD., moisture-curing adhesive.
· Modified silicone resin-based: polymer with crosslinkable silyl groups, "EXCESTAR-S6250" produced by AGC Inc., moisture-curing adhesive.
· Modified silicone resin-based: polymer with crosslinkable silyl groups, "SE-09" produced by Soken Chemical & Engineering Co., Ltd., moisture-curing adhesive.
· Modified silicone resin-based: polymer with crosslinkable silyl groups, "SILYL EST280" produced by KANEKA CORPORATION, moisture-curing adhesive.
· Silylated urethane-based: "SPUR3030" produced by Momentive Performance Materials Japan LLC.
· Ethylene-vinyl acetate copolymer resin-based (EVA-based): "V5774ETWR" produced by Mitsui Chemicals, Inc., heat-melt adhesive.
· Polystyrene-based: "FTR6100" produced by Mitsui Chemicals, Inc., heat-melt adhesive.
· Epoxy resin-based: "jER807" produced by Mitsubishi Chemical Corporation, amine curing agent, "FL052" produced by Mitsubishi Chemical Corporation. Catalyst, "CUREZOL 1. 2DMZ" produced by SHIKOKU CHEMICALS CORPORATION, thermosetting-reactive adhesive.

<Curing Catalyst>

· "NEOSTANN U220H" produced by Nitto Kasei Co., Ltd.

<Thermally Expandable Graphite>

· "EXP-50S150" produced by Fuji Graphite Works Co., Ltd., expansion onset temperature 150°C.
· "EXP-50S120" produced by Fuji Graphite Works Co., Ltd., expansion onset temperature 120°C.

<Inorganic Filler>

· Iron oxide.
· Aluminum hydroxide (produced by SHIRAISHI CALCIUM KAISHA, LTD.).
· Calcium carbonate (produced by SHIRAISHI CALCIUM KAISHA, LTD.).

[Example 1]

To produce the composition listed in Table 1, each component was introduced into an extruder and the thermally expandable composition kneaded at 110°C was extruded to obtain the thermally expandable fire-resistant sheet. Various evaluations were performed on the thermally expandable fire-resistant sheet (100 mm long, 1.5 mm thick, and 10 mm wide). Here, the extruder with a venting mechanism was used.

[Examples 4 to 6, Comparative Example 1]

The thermally expandable fire-resistant sheets were obtained in a similar manner to Example 1 except that the compositions were changed to those listed in Table 1. Various evaluations were performed on the thermally expandable fire-resistant sheets.

[Example 2]

To produce the composition listed in Table 1, each component was mixed at 40°C with a stirrer and dissolved in toluene to be a solid concentration of 40% to obtain a thermally expandable composition. The thermally expandable composition was then applied to a release PET film with a roll coater, and the coated material was dried to vaporize the solvent, forming a thermally expandable fire-resistant sheet on the release PET film. Various evaluations were performed on the thermally expandable fire-resistant sheet (100 mm long, 1.5 mm thick, and 10 mm wide).

[Example 3]

To produce the composition listed in Table 1, each component was mixed at 25°C with a stirrer to obtain a thermally expandable composition. The thermally expandable composition was then applied to a release PET film with a roll coater, and the coated material was dried at 120°C to vaporize the solvent, forming a thermally expandable fire-resistant sheet on the release PET film. Various evaluations were performed on the thermally expandable fire-resistant sheet (100 mm long, 1.5 mm thick, and 10 mm wide).

[Example 7 and 8]

The thermally expandable fire-resistant sheets were obtained in a similar manner to Example 3 except that the compositions and drying temperatures were changed to those listed in Table 1. Various evaluations were performed on the thermally expandable fire-resistant sheets.

[Example 9]

To produce the composition listed in Table 1, each component was mixed with a stirrer to obtain a thermally expandable composition. The thermally expandable composition was then heated to 110°C, molten, and mixed, and applied to a release PET film with a roll coater, and the coated material was cooled to room temperature (25°C), causing it to solidify and form a thermally expandable fire-resistant sheet on the release PET film. Various evaluations were performed on the thermally expandable fire-resistant sheet (100 mm long, 1.5 mm thick, and 10 mm wide).

[Example 10]

The thermally expandable fire-resistant sheet was obtained in a similar manner to Example 9 except that the composition was changed to that listed in Table 1. Various evaluations were performed on the thermally expandable fire-resistant sheet.

[Examples 11 to 18]

To produce the composition listed in Table 1, each component was mixed at 25°C with a stirrer to obtain a thermally expandable composition. The thermally expandable composition was then applied to a release PET film with a roll coater, and the coated material was cured at 50°C, forming a thermally expandable fire-resistant sheet on the release PET film. Various evaluations were performed on the thermally expandable fire-resistant sheets (20 mm long, 1.5 mm thick, and 10 mm wide).

[Example 19]

To produce the composition listed in Table 1, each component was mixed at 40°C with a stirrer to obtain a thermally expandable composition. The thermally expandable composition was then applied to a release PET film with a roll coater, and the coated material was cured by heat, forming a thermally expandable fire-resistant sheet on the release PET film. Various evaluations were performed on the thermally expandable fire-resistant sheet (100 mm long, 1.5 mm thick, and 10 mm wide).

Table 1

| | | Matrix | Grade | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Example 17 | Example 18 | Example 19 | Comparative Example 1 |
|---|---|---|---|---|---|---|---|---|---|---|---|---|---|---|---|---|---|---|---|---|---|---|---|
| Thermally expandable fire-resistant sheet (Thermally expandable composition) (parts by mass) | Matrix component | Chloroprene | SKYPRENE B-31 | 100 | | | | | | | | | | | | | | | | | | | 100 |
| | | | SKYPRENE Y-30S | | 100 | | | | | | | | | | | | | | | | | | |
| | | | SKYPRENE LA-710 | | | 100 | | | | | | | | | | | | | | | | | |
| | | SBR | JSR0202 | | | | 100 | | | | | | | | | | | | | | | | |
| | | SBS | TR1086 | | | | | 100 | | | | | | | | | | | | | | | |
| | | TPS | SEPTON 1020 | | | | | | 100 | | | | | | | | | | | | | | |
| | | Acrylic resin | ACRYDIC 57-773-BA | | | | | | | 100 | | | | | | | | | | | | | |
| | | Silicone resin | KR220L | | | | | | | | 100 | | | | | | | | | | | | |
| | | Modified silicone resin-based | MS polymer S-303 | | | | | | | | | | | 100 | | | | | | | | | |
| | | | US-6150 | | | | | | | | | | | | 100 | | | | | | | | |
| | | | EXCESTAR-S6250 | | | | | | | | | | | | | 100 | | | | | | | |
| | | | SE-09 | | | | | | | | | | | | | | 100 | | | | 100 | | |
| | | | SILYL EST280 | | | | | | | | | | | | | | | 100 | 100 | | | | |
| | | Silylated urethane-based | SPUR3030 | | | | | | | | | | | | | | | | | 100 | | | |
| | | EVA | V5774ETWR | | | | | | | | | 100 | | | | | | | | | | | |
| | | Polystyrene-based | FTR6100 | | | | | | | | | | 100 | | | | | | | | | | |
| | | Epoxy resin-based | JER-807 | | | | | | | | | | | | | | | | | | | 60 | |
| | | | FL052 | | | | | | | | | | | | | | | | | | | 40 | |
| | Curing catalyst | | NEOSTANN U220H | | | | | | | | | | | 2.5 | 2.5 | 2.5 | 2.5 | 2.5 | 2.5 | 2.5 | 2.5 | | |
| | | | 1.2-DMZ | | | | | | | | | | | | | | | | | | | 2.5 | |
| | Thermally expandable graphite | | EXP-50S150 | 50 | 50 | 50 | 50 | 50 | 50 | | 50 | 50 | 50 | 50 | 50 | 50 | 50 | 50 | 50 | | | 50 | 100 |
| | | | EXP-50S120 | | | | | | | 50 | | | | | | | | | | 50 | 50 | | |
| | Inorganic filler | | Iron oxide | 25 | 25 | 25 | 25 | 25 | 25 | | | | | | | | | | | | | | 100 |
| | | | Aluminum hydroxide | | | | | | | 25 | 25 | 25 | 25 | 25 | 25 | 25 | 25 | 25 | 25 | 25 | 25 | 25 | |
| | | | Calcium carbonate | 25 | 25 | 25 | 25 | 25 | 25 | 25 | 25 | 25 | 25 | 25 | 25 | 25 | 25 | 25 | 25 | 25 | 25 | 25 | 100 |
| Viscosity during kneading | | | Mooney viscosity (during kneading) ML(1+4) 100°C | 51 | | | 55 | 52 | 56 | | | | | | | | | | | | | | 74 |
| | | | Viscosity measured by rheometer at 40°C (Pa·s) | | 7 | 8 | | | | 11 | 5 | | | | | | | | | | | 34 | |
| | | | Viscosity measured by rheometer at 120°C (Pa·s) | | | | | | | | | 25 | 40 | | | | | | | | | | |
| Preparation Conditions | | | Kneading temperature/°C | 110 | 40 | 40 | 110 | 110 | 110 | 40 | 40 | 110 | 110 | | | | | | | | | | 110 |
| | | | Drying temperature/°C | - | - | 120 | - | - | - | 90 | 120 | - | - | | | | | | | | | | |
| | | | Curing temperature/°C | | | | | | | | | | | 50 | 50 | 50 | 50 | 50 | 50 | 50 | 50 | 80 | |
| Form | | | Length/m | 100 | 100 | 100 | 100 | 100 | 100 | 100 | 100 | 100 | 100 | 20 | 20 | 20 | 20 | 20 | 20 | 20 | 20 | 20 | 100 |
| | | | Average thickness/mm | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | | | Thickness variation/% | 4 | 5 | 3 | 2 | 4 | 6 | 5 | 5 | 7 | 8 | 6 | 8 | 7 | 6 | 5 | 6 | 6 | 5 | 5 | 18 |
| Evaluations | | | Appearance | A | A | A | A | A | A | A | A | A | A | A | A | A | A | A | A | A | A | A | B |
| | | | Strength | A | A | A | A | A | A | A | A | A | A | A | A | A | A | A | A | A | A | A | B |
| | | | Expansion onset temperature/°C | 150 | 150 | 150 | 150 | 150 | 150 | 120 | 150 | 150 | 150 | 150 | 150 | 150 | 150 | 150 | 150 | 120 | 120 | 150 | 150 |
| | | | Expansion ratio 200°C | 6.3 | 6.8 | 8.3 | 6.5 | 6.4 | 5.9 | 10.2 | 8.5 | 8.2 | 8.1 | 11.1 | 12.3 | 12.1 | 13.2 | 12.5 | 12.2 | 15.4 | 16.2 | 11.8 | 8.6 |
| | | | Elution ratio/% | 0.75 | 0.74 | 0.74 | 0.75 | 0.75 | 0.75 | 0.78 | 0.74 | 0.75 | 0.74 | 0.73 | 0.68 | 0.71 | 0.68 | 0.66 | 0.70 | 0.75 | 0.77 | 0.97 | 0.74 |

Table 1 lists the compositions of the thermally expandable fire-resistant sheets, i.e., the compositions with respect to the solid contents in the thermally expandable compositions.

In each Example, a thermally expandable fire-resistant sheet with good appearance and long length could be obtained despite the use of thermally expandable graphite with a low thermal expansion onset temperature.

In contrast, the thermally expandable fire-resistant sheet of Comparative Example 1 had a large variation in thickness and poor appearance and strength.

**Claims**

1. A thermally expandable fire-resistant sheet comprising a matrix component and thermally expandable graphite, and having an expansion onset temperature of 160°C or less, the thermally expandable fire-resistant sheet having an average thickness of 0.5 mm or more and a thickness variation that is 10% or less of the average thickness, and being a wound body with a length of 1 m or more.

2. The thermally expandable fire-resistant sheet according to claim 1, further comprising at least one selected from the group consisting of a thermally expandable inorganic material other than the thermally expandable graphite and an inorganic filler.

3. The thermally expandable fire-resistant sheet according to claim 2, wherein a content of the thermally expandable graphite is 3 to 300 parts by mass and a content of the inorganic filler is 2 to 200 parts by mass, based on 100 parts by mass of the matrix component.

4. The thermally expandable fire-resistant sheet according to claim 1 or 2, wherein an expansion ratio is 5 or more when heated at 200°C for 30 minutes.

5. The thermally expandable fire-resistant sheet according to claim 1 or 2, wherein an elution ratio is 3% or less after being immerged in pure water at 60°C for 1 week.

6. The thermally expandable fire-resistant sheet according to claim 1 or 2, wherein the matrix component is free of phosphorus components.

7. The thermally expandable fire-resistant sheet according to claim 1 or 2, comprising a substrate or a pressure-sensitive adhesive layer on at least one side of the sheet.

8. Fire prevention equipment having the thermally expandable fire-resistant sheet cut out of the wound body according to claim 1 or 2 mounted on at least a part of the fire prevention equipment.

## INTERNATIONAL SEARCH REPORT

| International application No. |
| --- |
| **PCT/JP2024/016080** |

### A. CLASSIFICATION OF SUBJECT MATTER

*E04B 1/94*(2006.01)i; *B32B 7/027*(2019.01)i; *B32B 27/18*(2006.01)i; *C08J 5/18*(2006.01)i; *C09K 21/02*(2006.01)i; *E06B 5/16*(2006.01)i
FI:    E04B1/94 T; B32B7/027; B32B27/18 Z; C08J5/18 CEZ; C09K21/02; E06B5/16

According to International Patent Classification (IPC) or to both national classification and IPC

### B. FIELDS SEARCHED

Minimum documentation searched (classification system followed by classification symbols)
E04B1/94; B32B7/027; B32B27/18; C08J5/18; C09K21/02; E06B5/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2018-70879 A (SEKISUI CHEMICAL CO., LTD.) 10 May 2018 (2018-05-10) paragraphs [0001]-[0062] | 1-8 |
| Y | JP 2019-183157 A (SEKISUI CHEMICAL CO., LTD.) 24 October 2019 (2019-10-24) paragraphs [0013], [0021], [0078] | 1-8 |
| Y | JP 2017-155227 A (SEKISUI CHEMICAL CO., LTD.) 07 September 2017 (2017-09-07) claim 1, paragraphs [0073], [0112] | 1-8 |
| Y | JP 2017-141661 A (SEKISUI CHEMICAL CO., LTD.) 17 August 2017 (2017-08-17) paragraphs [0018], [0063] | 1-8 |
| Y | JP 2004-43641 A (SEKISUI CHEMICAL CO., LTD.) 12 February 2004 (2004-02-12) paragraph [0040] | 2 |
| Y | JP 2021-187974 A (SEKISUI CHEMICAL CO., LTD.) 13 December 2021 (2021-12-13) paragraphs [0050], [0064]-[0066] | 5-6 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 June 2024** | **25 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/016080**

| Patent document cited in search report | | | Publication date (day/month/year) | Patent family member(s) | | Publication date (day/month/year) |
|---|---|---|---|---|---|---|
| JP | 2018-70879 | A | 10 May 2018 | (Family: none) | | |
| JP | 2019-183157 | A | 24 October 2019 | (Family: none) | | |
| JP | 2017-155227 | A | 07 September 2017 | JP | 2018-131625 A | |
| JP | 2017-141661 | A | 17 August 2017 | JP | 2019-112938 A | |
| JP | 2004-43641 | A | 12 February 2004 | (Family: none) | | |
| JP | 2021-187974 | A | 13 December 2021 | JP | 2022-33116 A | |

Form PCT/ISA/210 (patent family annex) (July 2022)

**REFERENCES CITED IN THE DESCRIPTION**

**Patent documents cited in the description**

- JP 2017141463 A